# EUROPEAN PATENT APPLICATION

(11) **EP 4 629 374 A2**
(43) Date of publication of application: **08.10.2025**
(21) Application number: 25168025.2
(22) Date of filing: 02.04.2025
(51) Int. Cl.: H01M 10/04, H01M 50/107, H01M 50/152, H01M 50/167

(54) **SECONDARY BATTERY MANUFACTURING APPARATUS AND SECONDARY BATTERY MANUFACTURED USING THE SECONDARY BATTERY MANUFACTURING APPARATUS**

(30) Priority: 03.04.2024 KR 20240045191
(71) Applicant: SAMSUNG SDI CO., LTD., Yongin-si, Gyeonggi-do 17084 (KR)
(72) Inventor: KANG, Bong Geun, 17084 Yongin-si, Gyeonggi-do (KR); CHOI, Woo Hyuk, 17084 Yongin-si, Gyeonggi-do (KR); YANG, Jun Ho, 17084 Yongin-si, Gyeonggi-do (KR); PARK, Hyun Suk, 17084 Yongin-si, Gyeonggi-do (KR); KWON, Jun Hwan, 17084 Yongin-si, Gyeonggi-do, (KR); LEE, Tae Yoon, 17084 Yongin-si, Gyeonggi-do (KR); KIM, Young Ho, 17084 Yongin-si, Gyeonggi-do (KR); LIM, Seung Man, 17084 Yongin-si, Gyeonggi-do (KR)
(74) Representative: Gulde & Partner

(57) **Abstract**

A secondary battery manufacturing apparatus includes a plurality of jigs, each of the jigs including a support tip protruding in a direction toward a beading portion of a side portion of a can of a secondary battery, the support tip being inserted into the beading portion. In the state in which the support tips are inserted into the beading portion, the jigs bend an end of the side portion of the can by pressing to form a crimping portion. A load applied to the jigs may be dispersed even if the thickness of the can increases, thereby preventing damage to the jigs.

## Description

### BACKGROUND

### 1. Field

Embodiments of the present disclosure relate to a secondary battery manufacturing apparatus capable of reducing shaping load during shaping of the secondary battery and improving the appearance of a secondary battery, and a secondary battery manufactured with the secondary battery manufacturing apparatus.

### 2. Description of the Related Art

As the demand for high-capacity secondary batteries has increased in recent years, various attempts have been made to increase the size of secondary batteries or to improve an internal structure capable of increasing capacity without increasing size.

Depending on the appearance thereof, secondary batteries may be categorized as a prismatic secondary battery, a pouch-shaped secondary battery, and a cylindrical secondary battery. The cylindrical secondary battery may have a structure in which an electrode assembly is received in a cylindrical can and a beading portion and a crimping portion are provided to couple a cap assembly to an open end of the can.

If the diameter of the can is increased to increase the capacity of the cylindrical secondary battery, the thickness of a cylindrical side portion of the can may increase. Such an increase in thickness of the can may lead to an increase in load during shaping of the can. The increased load may be applied to a jig configured to shape the can, whereby the jig may be damaged. If the jig is damaged, a shaped part of the can may be crushed or stabbed by the jig, which may degrade the quality of the secondary battery.

The information disclosed in this section is provided only for enhancement of understanding of the background of the present disclosure and therefore it may contain information that does not form the prior art.

### SUMMARY

Embodiments of the present disclosure provide a secondary battery manufacturing apparatus capable of reducing shaping load and improving the appearance of a secondary battery during shaping of the secondary battery and a secondary battery manufactured thereby.

A secondary battery manufacturing apparatus according to an embodiment of the present disclosure includes a plurality of jigs, each of the jigs including a support tip configured to protrude in a direction toward a beading portion of a side portion of a can for a secondary battery, with the support tip being insertable into the beading portion, wherein the jigs are configured to bend an end of the side portion of the can by pressing the side portion of the can to form a crimping portion in the can in the state in which the support tips are inserted into the beading portion of the can. A plurality of upper jigs may be disposed above an open end of a side portion of a cylindrical can during a secondary battery manufacturing process.

The jigs may be provided in even number, and the lower jigs may be symmetrical to each other.

The jigs may be provided in odd number, and the lower jigs may be asymmetrical to each other.

The number of the lower jigs may be 4 or more.

The relationship of A1=L3/(L1/2)*100 may be satisfied, with L3 being a length of each of the support tips, L1/2 being a radius of the secondary battery, and with A1 being at least 9.5% of the radius L1/2 of the secondary battery.

The relationship of A2=L3/L2*100 may be satisfied, with L3 being a length of each of the support tips, L2 being a depth of the beading portion of the secondary battery, and with A2 being 75% to 90% of the depth L2 of the beading portion.

The relationship of A3=H2/H1*100 may be satisfied, with H2 being a height of each of the support tips, H1 being a height of the beading portion, and with A3 being 80% to 90% of the height H1 of the beading portion.

Each of the jigs may include a base plate and a body integrally formed with the base plate, the body having a predetermined thickness, the body being arc-shaped.

The body may include an inner circumferential surface and an outer circumferential surface each having an arc shape and an inclined surface connecting the inner circumferential surface and the outer circumferential surface to each other, the inclined surface having a thickness gradually decreasing toward an upper end thereof.

The body may further include a support portion protruding from the inner circumferential surface in a direction opposite to a direction the base plate extends from the body.

Each of an upper surface and a lower surface of the support portion may be in a plane with a corresponding one of an upper surface and a lower surface of the base plate.

The support tip may protrude from an inner surface of the support portion that connects the upper surface and the lower surface of the support portion to each other.

The support tip may be spaced apart from the upper surface of the support portion.

The relationship of A4=H4/H3*100 may be satisfied, with H4 being a height from a top of the support tip to the upper surface of the support portion, H3 being a cell engagement thickness height from an upper surface of the beading portion in contact with an upper surface of the support tip to an upper surface of the crimping portion, and with A4 being at least 55% of the cell engagement thickness.

A secondary battery according to an embodiment of the present disclosure is manufactured by the secondary battery manufacturing apparatus.

A secondary battery manufacturing apparatus according to another embodiment may include a plurality of jigs, each of the jigs including a body and a support tip protruding from the body, the plurality of jigs being positioned to surround a beading portion of a can for a secondary battery, wherein each of the support tips are configured to be inserted into the beading portion of the can, and wherein the jigs are configured to bend an end of the side portion of the can by pressing the side portion of the can to form a crimping portion when the support tips are inserted into the beading portion of the can.

According to an embodiment, a battery manufacturing system may include the battery manufacturing apparatus according to any of the embodiments and the secondary battery according to embodiments.

### BRIEF DESCRIPTION OF THE DRAWINGS

FIG. 1 is a perspective view showing a secondary battery manufacturing apparatus according to an embodiment of the present disclosure;
FIG. 2 is a partial sectional view of the manufacturing apparatus shown in FIG. 1;
FIG. 3 is a perspective view of an exemplary cylindrical secondary battery;
FIG. 4 is a sectional view of the cylindrical secondary battery shown in FIG. 3;
FIG. 5 is a partial perspective view showing a part of the manufacturing apparatus shown in FIG. 1 and a part of the secondary battery; and
FIG. 6 is a partial sectional view showing a part of a secondary battery manufactured by the manufacturing apparatus shown in FIG. 1.

### DETAILED DESCRIPTION OF EXEMPLARY EMBODIMENTS

Embodiments are provided to more fully illustrate the present disclosure to a person having ordinary skill in the art, the following embodiments may be modified in various other forms, and the scope of the present disclosure is not limited to the following embodiments. The embodiments are provided to make the present disclosure more complete and to convey the idea of the present disclosure fully to those skilled in the art.

In the following drawings, the thickness or size of each layer is exaggerated for convenience and clarity of description and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the present disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the present disclosure.

Terms related to space, such as "beneath," "below," "lower," "above," and "upper," may be utilized to facilitate understanding of one element or feature shown in the drawings as different from another element or feature. The terms related to space are intended to facilitate understanding of the present disclosure in various states of process or use and are not intended to limit the present disclosure. For example, if an element or feature in a figure is inverted, an element or feature described as "beneath" or "below" becomes "above" or "upper." Thus, "beneath" is a concept that encompasses "above" or "below".

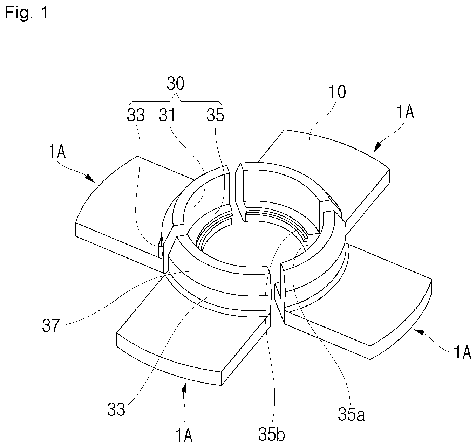

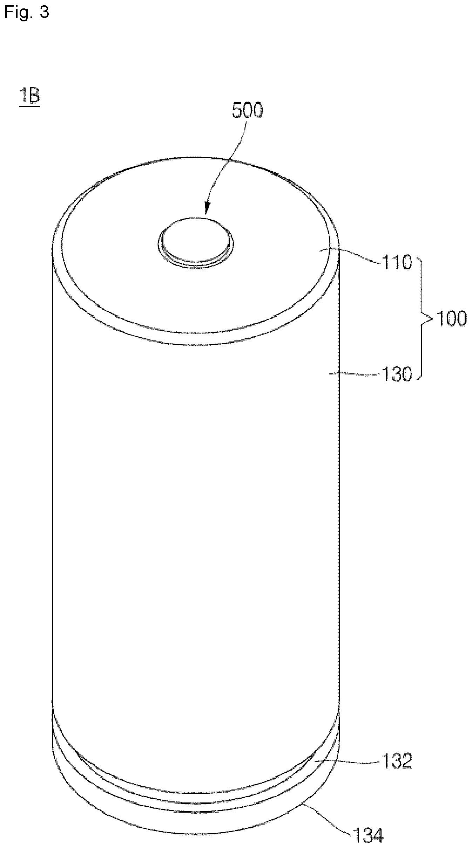

Hereinafter, a secondary battery manufacturing apparatus according to an embodiment of the present disclosure will be described in detail with reference to the accompanying drawings (for convenience, a direction toward the top of FIGS. 1 and 3 will be defined and described as an upward direction and a direction toward the bottom of FIGS. 1 and 3 will be defined and described as a downward direction).

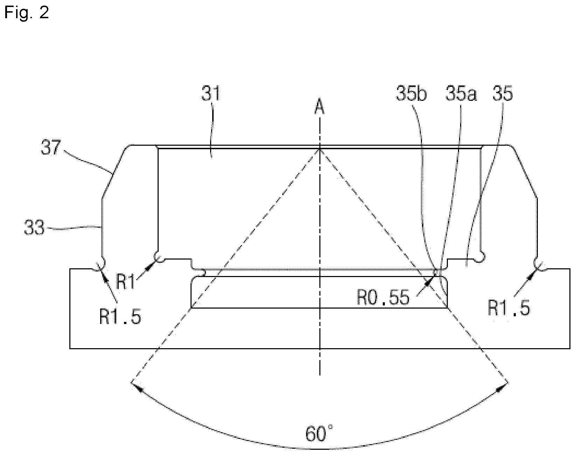

FIG. 1 is a perspective view showing a secondary battery manufacturing apparatus according to an embodiment of the present disclosure. FIG. 2 is a partial sectional view of the manufacturing apparatus shown in FIG. 1.

As shown in FIGS. 1 and 2, the secondary battery manufacturing apparatus according to the embodiment of the present disclosure may be a manufacturing apparatus used in a crimping step of a secondary battery manufacturing process. The secondary battery manufacturing apparatus may be a crimping jig including four or more jaws.

The crimping jig according to the embodiment of the present disclosure may include a plurality of lower jigs 1A. For example, the crimping jig may include a plurality of upper jigs (not shown) and a lower jigs 1A. The lower jigs 1A may also be referred to as a jaws. The upper jigs may be provided in one or the same number as the lower jigs 1A. The upper jigs may not be described repeatedly, wherein the description of the lower jigs 1A may equally apply to the upper jigs. The plurality of upper jigs may be disposed above an open end of a side portion of a cylindrical can during a secondary battery manufacturing process. An example in which four lower jigs 1A are provided is shown in FIG. 1. The lower jigs 1A may be provided in odd or even numbers greater than four. If the lower jigs 1A are provided in an odd number, the lower jigs 1A may be asymmetrical to each other. If the lower jigs 1A are provided in an even number, the lower jigs 1A may be symmetrical to each other. The lower jigs 1A may have the same structure. Each of the lower jigs 1A may include a base plate 10 and/or a body 30. The body 30 may be integrally formed with the base plate 10. A support tip 35b may protrude from the body 30. For example, the support tip 35b may protrude from an inner surface of the body 30. The support tips 35b be capable of reducing shaping load during shaping of the secondary battery.

The base plate 10 may be a part connected to a driving unit (not shown) and configured to move toward a secondary battery and to support the body 30. The base plate 10 may have a predetermined thickness and may be formed in the shape of an approximately quadrangular plate. One end of the base plate 10 may be connected to the body 30, and the other end of the base plate 10 may be connected to the driving unit. The other end of the base plate 10 may be streamlined so as to correspond to the shape of the body 30; however, the present disclosure is not limited thereto.

The body 30 may have an arc shape in plan view, for example a partial arc shape. A lower end of an outer circumferential surface 33 of the body 30 may be integrally formed with the base plate 10. The body 30 may have a shape resembling the shape of one of a plurality of longitudinally divided parts of a cylinder. In order to crimp a single can, the plurality of bodies 30 may be gathered to form a cylindrical shape. If the plurality of bodies 30 is brought into tight contact with each other, the plurality of bodies may form a cylindrical shape. The number of the base plates 10 may be equal to the number of the bodies 30.

The body 30 may have a predetermined thickness. The body may have an inner circumferential surface 31 and an outer circumferential surface 33 that are at least partially arc-shaped. A lower part of the inner circumferential surface 31 may protrude in an inner direction, e.g. a direction opposite the base plate 10, to form a support portion 35. An upper part of the outer circumferential surface 33 may form an inclined surface 37 having a thickness gradually decreasing toward an upper end thereof.

The support portion 35 may protrude with a predetermined thickness. An upper surface of the support portion 35 may be in the same plane as an upper surface of the base plate 10. A lower surface of the support portion 35 may be in the same plane as the base plate 10. A surface connecting the upper surface and the lower surface of the support portion 35 to each other is defined as an inner surface 35a. A support tip 35b protruding in the inner direction, e.g. the direction opposite the base plate 10, may be provided on the inner surface 35a. The support tip 35b may extend from the inner surface of the support portion 35. By the support tips 35b, the secondary battery manufacturing apparatus may be capable of reducing shaping load during shaping of the secondary battery. The support tip 35b may be spaced apart from the upper surface of the support portion 35. The support tip 35b may extend parallel to the upper surface or the lower surface of the support portion 35. An extending end of the support tip 35b may be rounded. This may further reduce shaping load and thus prevent damage during shaping of the secondary battery.

As shown in FIG. 2, a rounded groove may be provided in each of the connection region between the outer circumferential surface 33 of the body 30 and the base plate 10 and/or the connection region between the inner circumferential surface 31 of the body 30 and the upper surface of the support portion 35. If the radius of curvature (herein, "R value") of the rounded groove between the inner circumferential surface 31 of the body 30 and the upper surface of the support portion 35 is 1, the R value of the rounded groove between the outer circumferential surface 33 of the body 30 and the base plate 10 may be 1.5. The R value of the end of the support tip 35b may be 0.55. The region between the inner surface 35a of the support portion 35 and the upper and lower surfaces of the support tip 35b may also have a rounded shape. The R value between the inner surface 35a of the support portion 35 and the upper surface of the support tip 35b may be 0.7 (based on the R value of the rounded groove between the inner circumferential surface 31 of the body 30 and the upper surface of the support portion 35). The R value between the inner surface 35a of the support portion 35 and the lower surface of the support tip 35b may be 1.5. The reason that each of the regions between the inner surface 35a of the support portion 35 and the upper and lower surfaces of the support tip 35b and the end of the support tip 35b is rounded so as to have an R value may be to prevent damage to a can upon with the lower jigs 1A supporting a beading portion and the periphery thereof during shaping of a crimping portion. In the example shown in FIG. 2, the angle between the central axis A of the body 30 in a leftward-rightward direction and opposite ends of the inner surface 35a of the support portion 35 in the leftward-rightward direction may be 60 degrees.

The crimping jig having the above structure may be used to form a crimping portion after forming a beading portion in the state in which an electrode assembly is received in a can. Before describing the operation of the crimping jig, the structure of a secondary battery will be briefly described.

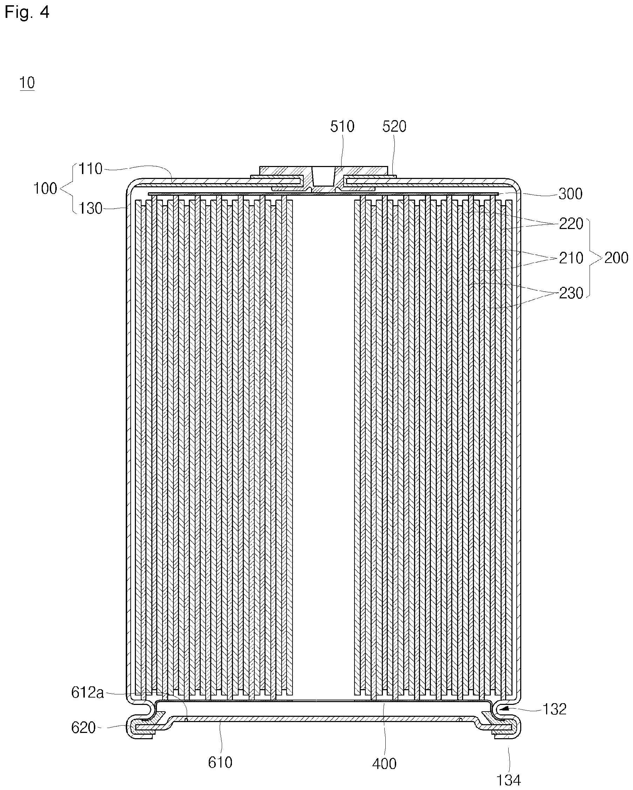

FIG. 3 is a perspective view of an exemplary cylindrical secondary battery. FIG. 4 is a sectional view of the cylindrical secondary battery shown in FIG. 3.

As shown in FIGs. 3 and 4, the exemplary cylindrical secondary battery 1B may include a cylindrical can 100, an electrode assembly 200 received in the can 100, a first electrode current collector plate 300, a second electrode current collector plate 400, a terminal unit 500 provided on one side of the can 100, and a cap assembly provided on the other side of the can 100.

The can 100 may include a circular upper surface portion 110 and a cylindrical side portion 130 extending downward from the upper surface portion 110. A terminal hole may be formed through the center of the upper surface portion 110. The terminal unit 500 may be coupled to the terminal hole. An upper end of the side portion 130 may be connected to the upper surface portion 110 so as to be integrally formed therewith. A lower end of the side portion 130 may be open, and the cap assembly may be provided at the open end of the side portion. A beading portion 132 may be formed adjacent the lower end of the side portion 130. The beading portion 132 may be inwardly recessed from the side portion 130. An end of side portion 130 spaced apart from the beading portion 132 may be bent inwardly of the can 100 to form a crimping portion 134. The beading portion 132 may prevent separation of the electrode assembly 200 from the can 100. The cap assembly may be disposed between the beading portion 132 and the crimping portion 134. The crimping portion 134 may fix the cap assembly such that the can 100 is sealed. The crimping jig may be used to shape the crimping portion 134. The can 100 may be made of steel, a steel alloy, aluminum, an aluminum alloy, or an equivalent thereto; however, the present disclosure is not limited thereto. The electrode assembly 200, the first electrode current collector plate 300, and the second electrode current collector plate 400 may be received in the can 100 together with an electrolyte.

The electrode assembly 200 may be configured such that a first electrode plate 210, a second electrode plate 220, and a separator 230 interposed therebetween are wound in a cylindrical shape. In the present embodiment, the first electrode plate 210 may be a positive electrode plate, and the second electrode plate 220 may be a negative electrode plate.

The first electrode plate 210 may have a positive electrode active material layer 212 formed on at least one surface of aluminum (Al) foil by coating. The positive electrode active material layer 212 may be made of a transition metal oxide (LiCoO₂, LiNiO₂, or LiMn₂O₄). The first electrode plate 210 may be provided with a first electrode non-coated portion on which the positive electrode active material layer 212 is not formed. The first electrode non-coated portion may be cut into a predetermined shape by notching to form a plurality of first electrode substrate tabs. The first electrode substrate tabs may be disposed toward the upper surface portion 110 of the can 100 and may be electrically connected to the first electrode current collector plate 300.

The second electrode plate 220 may have a negative electrode active material layer 222 formed on at least one surface of copper (Cu) or nickel (Ni) foil by coating. The negative electrode active material layer 222 may be made of graphite or carbon. The second electrode plate 220 may be provided with a second electrode non-coated portion on which the negative electrode active material layer 222 is not formed. The second electrode non-coated portion may be cut into a predetermined shape by notching to form a plurality of second electrode substrate tabs. The second electrode substrate tabs 224 may be disposed toward the bottom of the can 100 and may be electrically connected to the second electrode current collector plate 400.

The separator 230 may be made of polyethylene (PE) or polypropylene (PP); however, the present disclosure is not limited thereto. The separator 230 may prevent electrical short circuit between the first electrode plate 210 and the second electrode plate 220 and may allow migration of lithium ions.

The electrode assembly 200 having the above structure may be electrically connected to the first electrode current collector plate 300 and the second electrode current collector plate 400, which may be electrically connected to the terminal unit 500 and the can 100, respectively. To this end, the first electrode current collector plate 300 may be made of aluminum or an aluminum alloy for electrical connection with the first electrode plate 210. The second electrode current collector plate 400 may be made of copper for electrical connection with the second electrode plate 220. A lower surface of the first electrode current collector plate 300 may be welded to the first electrode substrate tabs in contact therewith. An upper surface of the first electrode current collector plate 300 may be welded to a rivet terminal 510 of the terminal unit 500, a description of which will follow. Consequently, the first electrode current collector plate 300 and the rivet terminal 510 may be electrically connected to each other via the first electrode current collector plate 300. An edge of the second electrode current collector plate 400 may be welded and electrically connected to the beading portion 132. But, the second electrode current collector plate may not be electrically connected to the cap assembly.

The terminal unit 500 may include a rivet terminal 510 and at least one insulator 520 configured to insulate the rivet terminal 510. The rivet terminal 510 may be inserted into a terminal hole 110a formed in the upper surface portion 110 of the can 100 and may be electrically connected to the first electrode current collector plate 300. The rivet terminal 510 may be a terminal coupled to the upper surface portion 110 of the can 100 by riveting. During coupling of the rivet terminal 510, the at least one insulator 520 may be inserted between the rivet terminal 510 and the upper surface portion 110 of the can 100 to insulate the can 100 and the rivet terminal 510 from each other. The insulator 520 may be made of an insulating material.

The cap assembly may include a cap plate 610 configured to seal the can 100 and a gasket 620 configured to insulate the can 100 and the cap plate 610 from each other. The cap plate 610 may have an approximately circular shape, and an edge of the cap plate may be disposed between the beading portion 132 and the crimping portion 134 while being surrounded by the gasket 620. A notch 612a serving as a vent may be formed in the cap plate 600. The electrode assembly 200 may be inserted into the can 100, the beading portion 132 may be formed, the cap assembly may be seated, and the crimping portion 134 may be formed, whereby the secondary battery 1B may be completed. In the state in which the cap assembly is seated on the beading portion 132, the crimping jig may be used.

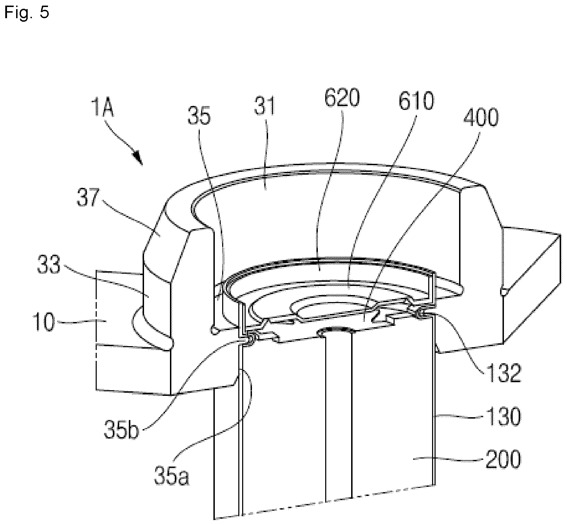

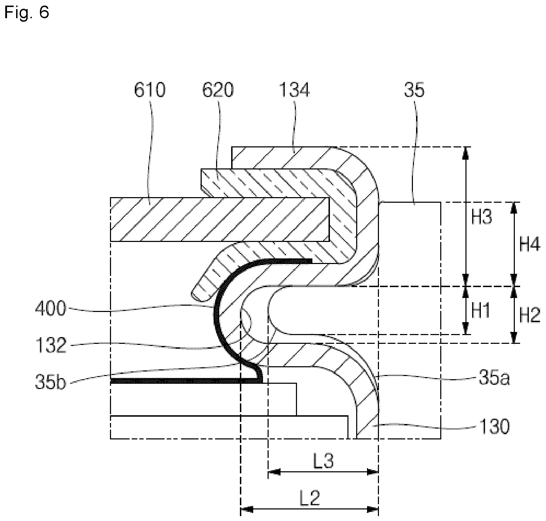

FIG. 5 is a partial perspective view showing a part of the manufacturing apparatus shown in FIG. 1 and a part of the secondary battery. FIG. 5 shows the state in which the crimping jig is coupled to the secondary battery 1B having the beading portion 132 formed therein in order to shape the crimping portion 134. A lower jig 1A from among lower jigs (here represented continuous as for the jigs 1A being in tight contact) may be shown in the partial perspective view. Although not shown in the figure, the upper surface portion 110 of the can 100 of the secondary battery 1B may be supported in a state of facing the lower side of the lower jig 1A. At this time, the support tip 35b formed on the support portion 35 of the lower jig 1A may be inserted into the beading portion 132 of the secondary battery 1B. The part of the side portion 130 under the beading portion 132 may be brought into tight contact with a lower part of the inner surface 35a of the support portion 35. This part may be a lower part of the support tip 35b. The part of the side portion 130 above the beading portion 132 may be brought into contact with an upper part of the inner surface 35a of the support portion 35. This part may be an upper part of the support tip 35b. Except for the part of the side portion of the can 100 in contact with the top of the inner surface 35a of the support portion 35, the remaining part of the side portion may protrude above the support portion 35. This state may be illustrated in FIG. 5. If the protruding part is pressed by the upper jigs (not shown), the upper end of the side portion 130 may be folded toward the cap plate 610 to form the crimping portion 134. The state after folding may be shown in Fig.6. At this time, the upper surface of the support portion 35 may prevent further downward movement of the upper jigs while the side portion 130 is bent. Consequently, the crimping portion 134 may be formed at a predetermined distance from the beading portion 132. To this end, the position of the support portion 35 of the crimping jig on which the support tip 35b is formed may be designed in consideration of the distance between the beading portion 132 and the crimping portion 134.

FIG. 6 is a partial sectional view showing a part of a secondary battery manufactured by the manufacturing apparatus shown in FIG. 1. Hereinafter, the numerical relationship between the lower jig 1A and each part of the secondary battery 1B will be described with reference to FIG. 6.

The length L3 of the support tip 35b may have the relationship of A1=L3/(L1/2)*100, wherein L1/2 is the radius (L1 being the diameter) of the secondary battery 1B and A1 is a parameter that defines a value that can prevent damage to the crimping jig even if the thickness of the can 100 increases with increasing capacity. For example, A1 may be 9.5% or more of the radius L1/2 of the secondary battery 1B. In a specific example, if A1 is about 10.87% and the diameter of the secondary battery 1B is 46 mm, the length L3 of the support tip 35b may be 2.5 mm. Thus, by the above relationship, damage to the lower jigs 1A is prevented even if the thickness of the can 100 increases with increasing capacity. If the length L3 of the support tip 35b and the diameter of the secondary battery 1B are given, A1 may be calculated, and therefore it is possible to know whether a design according to the present disclosure has been applied to prevent damage to the crimping jig.

The length L3 of the support tip 35b may have the relationship of A2=L3/L2*100, where L2 is the depth of the beading portion 132 and A2 is a parameter that defines a value that can prevent damage to the crimping jig even if the thickness of the can 100 increases with increasing capacity. For example, A2 may be 75% to 90% of the beading depth L2. As a specific example, if A2 is about 80.65% and the beading depth L2 is 3.1 mm, the length L3 of the support tip 35b may be 2.5 mm. Thus, by the above relationship, damage to the lower jigs 1A is prevented even if the thickness of the can 100 increases with increasing capacity. If the length L3 of the support tip 35b and the beading depth L2 of the beading portion 132 are given, A2 may be calculated, and it is therefore possible to know whether a design according to the present disclosure has been applied to prevent damage to the crimping jig 1A.

The height H1 of the support tip 35b may have the relationship of A3=H1/H2*100, where H2 is the beading height (or thickness) of the beading portion 132 and A3 is a parameter that defines a value that can prevent damage to the crimping jig even if the thickness of the can 100 increases with increasing capacity. For example, A3 may be 80 to 90% of the beading height H2. As a specific example, if A3 is about 84.62% and the beading height H2 is 1.3 mm, the height H1 of the support tip 35b may be 1.1 mm. Thus, by the above relationship, damage to the lower jigs 1A is prevented even if the thickness of the can 100 increases with increasing capacity. If the height H1 of the support tip 35b and the beading height H2 of the beading portion 132 are given, A3 may be calculated, and it is therefore possible to know whether a design according to the present disclosure has been applied to prevent damage to the crimping jig 1A.

The height H4 from the top of the support tip 35b to the upper surface of the support portion 35 (hereinafter referred to as the step height of the support portion) may have the relationship of A4=H4/H3*100, where H3 is the height of the cell engagement (i.e., the thickness or width from the upper surface of the beading portion in contact with the top of the support tip to the upper surface of the crimping portion), and A4 is a parameter that defines a value that can improve the appearance of the can 100 of the secondary battery 1B. For example, A4 may be at least 55% of the cell engagement height H3. In a specific example, if A4 is about 60.7% and the cell engagement height H3 is 3.13 mm, the step height H4 of the support portion 35 may be 1.9 mm. If the step height H4 of the support portion 35 and the cell engagement height H3 are given, A4 may be calculated, and it is therefore possible to know whether a design according to the present disclosure has been applied to the crimping jig in order to improve the appearance of the secondary battery 1B.

As described above, the crimping jig according to the embodiment of the present disclosure may be designed such that the plurality of jaws is closely related to the dimensions of the respective parts of the secondary battery 1B. Therefore, even if the thickness of the can increases, load applied to the crimping jig may be dispersed. Thus, it is possible to prevent damage to the crimping jig and damage to the secondary battery and to improve the appearance and quality of the secondary battery.

As is apparent from the above description, a secondary battery manufacturing apparatus according to embodiments of the present disclosure may include a plurality of jaws, whereby it is possible to disperse load applied to a crimping jig even if the thickness of a can increases. Consequently, it is possible to prevent damage to the crimping jig and damage to a secondary battery and to improve the appearance and quality of the secondary battery.

Embodiments for implementing the present disclosure are described above, but the present disclosure is not limited to the above embodiments, and a person having ordinary skill in the art to which the present disclosure pertains will recognize the technical spirit of the present disclosure to the extent that various modifications can be made without departing from the gist of the present disclosure.

## Claims

1. A secondary battery manufacturing apparatus comprising:
a plurality of upper jigs configured to, when applied to a secondary battery, be disposed above an open end of a side portion (130) of a cylindrical can (100) during a secondary battery manufacturing process; and
a plurality of lower jigs (1A) disposed below the upper jigs, each of the lower jigs (1A) including a body (30) having a support tip (35b) protruding from the body (30) and configured to, when applied to the secondary battery, protrude toward a beading portion (132) of the side portion (130) of a can (100) of a secondary battery (1B) so that the support tip (35b) is inserted into the beading portion (132),
wherein the upper jigs are configured to bend an end of the side portion (130) of the can (100) by pressing the side portion (130) of the can (100) to form a crimping portion (134) in a state in which the support tips (35b) are inserted into the beading portion (132) of the can (100).

2. The secondary battery manufacturing apparatus as claimed in claim 1, wherein an even number of the lower jigs (1A) is provided.

3. The secondary battery manufacturing apparatus as claimed in claim 1, wherein an odd number of the lower jigs (1A) is provided.

4. The secondary battery manufacturing apparatus as claimed in any of the preceding claims 1 to 3, wherein the number of the lower jigs (1A) is 4 or more.

5. The secondary battery manufacturing apparatus as claimed in any one of the preceding claims 1 to 4, wherein a length L3 of the support tips (35b) satisfies a relationship of A1=L3/(L1/2)*100 with L1/2 being a radius of the secondary battery (1B), and with A1 being at least 9.5% of the radius L1/2 of the secondary battery (1B).

6. The secondary battery manufacturing apparatus as claimed in any one of the preceding claims 1 to 5, wherein a length L3 of the support tips (35b) satisfies a relationship of A2=L3/L2*100, with L2 being a depth of the beading portion (132) of the secondary battery (1B), and with A2 being 75% to 90% of the depth L2 of the beading portion (132).

7. The secondary battery manufacturing apparatus as claimed in any one of the preceding claims 1 to 6, wherein a thickness H1 of the support tips (35b) satisfies a relationship of A3=H1/H2*100, with H2 being a height of the beading portion (132), and with A3 being 80% to 90% of the height H2 of the beading portion (132).

8. The secondary battery manufacturing apparatus as claimed in any one of the preceding claims 1 to 7, wherein each of the lower jigs (1A) comprises a base plate (10) and the body (30) integrally formed with the base plate (10), the body (30) having a predetermined thickness and being arc-shaped.

9. The secondary battery manufacturing apparatus as claimed in claim 8, wherein the body (30) comprises an inner circumferential surface (31) and an outer circumferential surface (33) each having an arc shape, and the body (30) comprises an inclined surface (37) connecting the inner circumferential surface (31) and the outer circumferential surface (33) to each other, the inclined surface (37) having a thickness gradually decreasing toward an upper end thereof.

10. The secondary battery manufacturing apparatus as claimed in any of the preceding claims 8 to 9, wherein the body (30) further comprises a support portion (35) protruding in a direction opposite to a direction the base plate (10) extends from the body (30).

11. The secondary battery manufacturing apparatus as claimed in claim 10, wherein each of an upper surface and a lower surface of the support portion (35) is in a plane with a corresponding one of an upper surface and a lower surface of the base plate (10).

12. The secondary battery manufacturing apparatus as claimed in claim 11, wherein the support tip (35b) protrudes from an inner surface (35a) of the support portion (35) that connects the upper surface and the lower surface of the support portion (35) to each other.

13. The secondary battery manufacturing apparatus as claimed in any of the preceding claims 10 to 12, wherein the support tip (35b) is spaced apart from the upper surface of the support portion (35).

14. The secondary battery manufacturing apparatus as claimed in any of the claims 10 to 13, wherein a height H4 from a top of the support tip (35b) to the upper surface of the support portion (35) satisfies a relationship of A4=H4/H3*100, with H3 being a cell engagement height from an upper surface of the beading portion (132) in contact with an upper surface of the support tip (35b) to an upper surface of the crimping portion (134), and with A4 being at least 55% of the cell engagement thickness.

15. Method of manufacturing a secondary battery, comprising the steps of:
providing a secondary battery manufacturing apparatus according to any one of the preceding claims 1 to 14;positioning the secondary battery manufacturing apparatus with respect to a secondary battery (1B) so that the plurality of upper jigs are disposed above an open end of a side portion (130) of a cylindrical can (100) of the secondary battery;
positioning the secondary battery manufacturing apparatus with respect to the secondary battery (1B) so that the support tips (35B) protrude toward a beading portion (132) of a side portion (130) of a can (100) of the secondary battery (1B) and inserting the support tips (35b) into the beading portion (132),
bending an end of the side portion (130) of the can (100) by the upper jigs by pressing the side portion (130) of the can (100) to form a crimping portion (134) in a state in which the support tips (35b) are inserted into the beading portion (132) of the can (100).
